# EUROPEAN PATENT APPLICATION

(11) **EP 4 814 679 A1**
(43) Date of publication of application: **30.09.2026**
(21) Application number: 24893209.7
(22) Date of filing: 01.11.2024
(51) Int. Cl.: G06F 3/04845

(54) **LASER PROCESSING PREVIEW METHOD AND APPARATUS, LASER PROCESSING DEVICE, AND STORAGE MEDIUM**

(30) Priority: 24.11.2023 CN 202311589652; 09.07.2024 CN 202410916497
(71) Applicant: Makeblock Co., Ltd., Shenzhen, Guangdong 518000 (CN)
(72) Inventor: WEN, Qing, Shenzhen, Guangdong 518000 (CN); ZHANG, Hao, Shenzhen, Guangdong 518000 (CN)
(74) Representative: Ström & Gulliksson AB
(86) International application number: PCT/CN2024/129394
(87) International publication number: WO 2025/108051

(57) **Abstract**

Disclosed in embodiments of the present application are a preview method and device for laser processing, a laser processing device (202), and a storage medium. The method includes: if a laser processing device (202) detects in an image editing area a processing preview operation for a target image element in a processing reference image (10), element indication information of the target image element is determined. The processing preview operation includes one or both of a selection operation and an update operation. Then, alignment visible light parameters of the target image element are obtained, and alignment visible light is generated according to the alignment visible light parameters. Subsequently, alignment processing for the target image element is performed by using the alignment visible light based on the element indication information of the target image element.

## Description

### CROSS REFERENCE TO RELATED APPLICATIONS

This application claims priority to China patent application filed with the China Patent Office on November 24, 2023, with application number 202311589652.9, titled "Preview Method, Apparatus, Laser Engraving Equipment, and Storage Medium For Laser Engraving", and the China patent application filed with the China Patent Office on July 9, 2024, with application number 202410916497.5, titled "Preview Method, Apparatus, Laser Processing Equipment, and Storage medium For Laser Processing", the entire contents of which are incorporated into this application by reference.

### BACKGROUND OF INVENTION

### 1. FIELD OF INVENTION

The present application relates to a technical field of laser processing and computer science, and particularly to a preview method and device for laser processing, a laser processing device, and a storage medium.

### 2. RELATED ART

In fields of laser processing, to effectively combine laser processing technology and computer science technology can greatly improve the precision of laser processing and further expand application scenarios of laser processing products. In actual laser processing processes, processing images need to be aligned, but industries currently have problems with long alignment time and low efficiency.

### SUMMARY OF INVENTION

How to provide a preview method, device, laser processing device, and storage medium for laser processing that can present laser processing positions of relevant image elements to users in real time and effectively improve the efficiency of element alignment.

In one aspect, an embodiment of the present application provides a preview method for laser processing, including:
determining, in response to that a processing preview operation for a target image element in a processing reference image is detected in an image editing area, element indication information of the target image element, wherein the processing preview operation comprises one or both of a selection operation and an update operation;
obtaining alignment visible light parameters of the target image element;
generating alignment visible light according to the alignment visible light parameters, and performing alignment processing on the target image element by using the alignment visible light based on the element indication information of the target image element, so as to indicate a laser processing position of the target image element in a laser processing area.

In another aspect, an embodiment of the present application provides a preview device for laser processing, including:
an image processing module, configured to determine, in response to that a processing preview operation for a target image element in a processing reference image is detected in an image editing area, element indication information of the target image element, wherein the processing preview operation includes one or both of a selection operation and an update operation;
an obtaining module, configured to obtain alignment visible light parameters of the target image element; and
an alignment module, configured to generate alignment visible light according to the alignment visible light parameters, and perform alignment processing on the target image element by using the alignment visible light based on the element indication information of the target image element, so as to indicate a laser processing position of the target image element in a laser processing area.

In still another aspect, an embodiment of the present application provides a laser processing device, including:
a visible light moving device;
a visible light emitter, configured to emit one or more types of visible light and to perform moving of corresponding visible light by moving on the visible light moving device;
a processor, being in communication with the visible light emitter and adapted to execute one or more computer programs;
a memory, wherein the one or more computer programs are stored in the memory, and when the one or more computer programs are loaded and executed by the processor, the preview method for laser processing described in the first aspect is implemented.

In still another aspect, an embodiment of the present application provides a laser processing device, including:
a laser processing device including a processing device base plate and a processing head, the processing device base plate including a processing area for placing a material, and the processing head is configured to move over the processing area; and
a processing control device communicating with the laser processing device. The processing control device is configured to execute the preview method for laser processing described in the first aspect.

In still another aspect, an embodiment of the present application provides a storage medium, storing a computer program. The computer program, when loaded and executed by a processor, implements the preview method for laser processing described in the first aspect.

The present application has advantageous effects as follows: in an embodiment of the present application, when the laser processing device detects a selection operation or update operation on an image element in the image editing area, it will trigger the execution of alignment processing on the image element, and ultimately use the light spot formed by the alignment visible light in the laser processing area to indicate the laser processing position of the image element. Since the selection and update operations in the image editing area are usually generated when the image elements need to be adjusted, element adjustment will inevitably lead to changes in the corresponding laser processing position. Then, when a selection operation or an update operation is detected, the alignment processing of the image element is automatically triggered, so that users can align the image element without performing additional selection or triggering operations after editing the image element, and realizes real-time preview of the laser processing position of the image element during a user's image editing process, thereby effectively improving the efficiency of users in aligning image elements.

### BRIEF DESCRIPTION OF DRAWINGS

In order to better illustrate the technical solutions in the embodiments of the present application, the following is a brief introduction to the drawings required for use in the description of the embodiments. Apparently, the accompany drawings in the following description show some embodiments of the present application. A person skilled in the art may still derive other drawings from these accompanying drawings without creative efforts.
FIG. 1 is a schematic diagram of a processing reference image and image elements provided by an embodiment of the present application;
FIG. 2 is a schematic diagram of a laser processing system provided in an embodiment of the present application;
FIG. 3 is a schematic diagram of a hardware structure of a laser processing device provided in an embodiment of the present application;
FIG. 4 is a flowchart of a preview method for laser processing provided in an embodiment of the present application;
FIG. 5a is a schematic diagram of position update of an image element provided in an embodiment of the present application;
FIG. 5b is a schematic diagram of a size update of an image element provided in an embodiment of the present application;
FIG. 5c is a schematic diagram of an element update of an image element provided in an embodiment of the present application;
FIG. 6 is a schematic diagram of a preview process for performing laser processing provided in an embodiment of the present application;
FIG. 7 is a flowchart of another preview method for laser processing provided in an embodiment of the present application;
FIG. 8 is a schematic structural diagram of a laser processing device provided in an embodiment of the present application;
FIG. 9 is a schematic structural diagram of a laser processing device provided in an embodiment of the present application.

### DESCRIPTION OF PREFERRED EMBODIMENTS

It should be noted in advance that, in order to enable those skilled in the art to better understand the technical solutions proposed in the embodiments of the present application, the embodiments will be described clearly and completely with reference to one or more accompanying drawings. Furthermore, the various drawings presented in the embodiments of the present application are merely illustrative. For example, the execution order of the steps shown in the drawings may be adaptively adjusted according to actual application scenarios. Furthermore, in the embodiments of the present application, the block diagrams shown in the drawings are merely functional entities and do not necessarily correspond to physically independent entities. That is, these functional entities may be implemented in software, or in one or more hardware modules or integrated circuits, or in different networks and/or processor devices and/or microcontroller devices.

In the actual process of performing laser processing on the preset processing material, it is usually necessary to first use visible light to perform alignment processing of a processing reference image in the laser processing area, so as to use visible light in the laser processing area to indicate the laser processing position of the relevant image elements in the processing reference image, and then determine whether to perform laser processing according to the current laser processing position. That is to say, the alignment of image elements can be understood as using a beam of visible light to outline and position the image elements.

However, preview methods currently used in industries cannot preview the laser processing position of target image elements in real time during image editing processes, which leads to a long and low efficiency of element alignment before laser processing, increasing the overall time cost required for laser processing. In view of this, how to present laser processing positions of relevant image elements to users in real time during image editing processes, and thereby improve the efficiency of position calibration (or element alignment) of each image element, has become an important technical issue in current laser processing fields.

Specifically, the present application provides a laser processing preview solution for laser processing scenarios, which can be executed by laser processing device to achieve a preview of the laser processing position of image elements. In this solution, if the laser processing device detects a selection operation or an update operation on a target image element in the processing reference image within the image editing area, it means that a processing preview operation on the target image element is triggered. Then, the laser processing device will determine element indication information of the target image element, so that the laser processing device can subsequently uniquely describe the target image element based on the element indication information. In addition, the laser processing device will also obtain alignment visible light parameters of the target image element to generate alignment visible light based on the alignment visible light parameters, so that the laser processing device uses the alignment visible light based on the element indication information of the target image element to perform alignment processing on the target image element, and finally realize light spots obtained by projecting the alignment visible light in a laser processing area to indicate the laser processing position of the target image element.

Since the selection operation and update operation of image elements in the laser processing scenario usually occur when the image elements need to be adjusted, and the element adjustment will inevitably cause the corresponding laser processing position to change, then, triggering the execution of the alignment processing of the image element immediately after detecting the selection operation or update operation can enable users to preview the laser processing position of the image element in real time during the image editing process, and then quickly determine whether the image element needs to continue to be adaptively adjusted based on the currently indicated laser processing position. Ultimately, it can reduce the time cost spent by users on position calibration of each image element, and effectively improve the efficiency of element alignment.

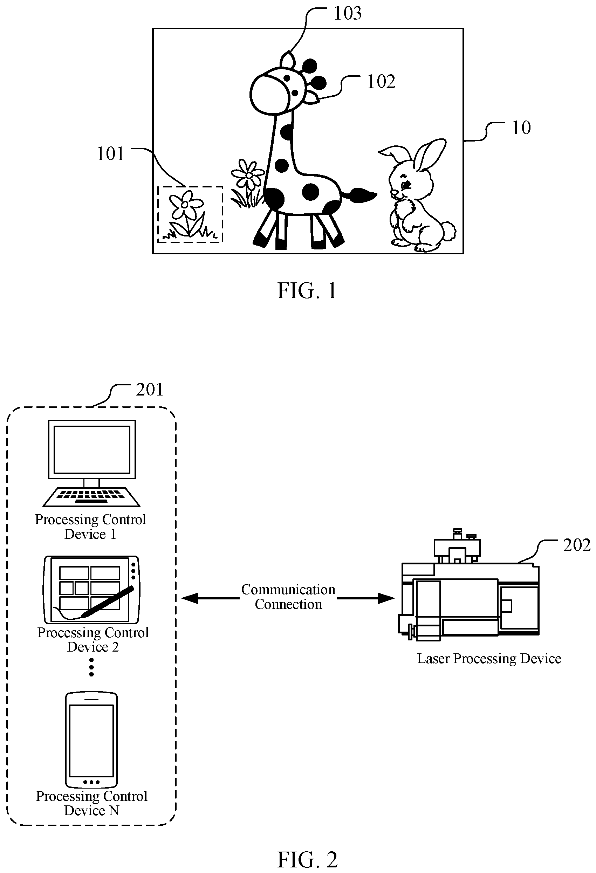

The processing reference image refers to an image obtained by laser processing on a laser processing material using laser processing device. The image elements in the processing reference image may include but are not limited to graphics, text, and lines. The processing reference image may include one or more image elements, and the target image element may be at least one of the one or more image elements. In practical applications, in order to distinguish different image elements in the processing reference image, an identifier may be assigned to each line in the processing reference image, so that lines with the same identifier can form one image element. Optionally, one or more image areas can be marked in the processing reference image, and an identifier can be assigned to each image area so that the image content existing in the image area with the same identifier is regarded as an image element. The embodiment of the present application does not limit the shape of each image area. For example, the processing reference image can be the image marked by 10 in FIG. 1, and an image element can be the image content contained in the image area marked by 101 in FIG. 1, or the line used to depict the giraffe's ear marked by 102 in FIG. 1, or the line used to depict the giraffe's ear marked by 103 in FIG. 1. For the convenience of explanation, the image content contained in the image area marked by 101 in FIG. 1 is referred to as image element 101 hereinafter.

In addition, in a specific embodiment, the laser processing device can be a single physical device, a composite device composed of multiple physical devices, or a composite device composed of a physical device and a virtual device. The embodiments of the present application do not limit this. When the laser processing device is a composite device, the laser processing device can be regarded as a laser processing system. Exemplarily, the structure of the laser processing system may be shown as in FIG. 2. As can be seen from FIG. 2, the laser processing system may include n processing control devices (such as one or more devices marked by 201 in FIG. 2) and laser processing devices (such as the device marked by 202 in FIG. 2), where n is a positive integer.

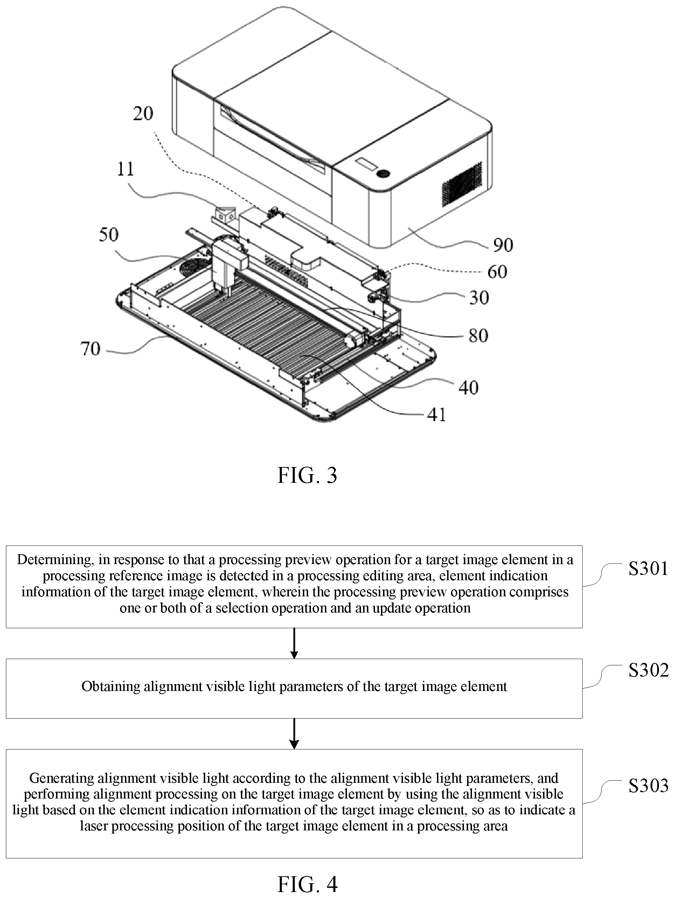

In the specific embodiment of FIG. 3, the laser processing device includes a processing device base plate and a processing head. The processing device base plate includes a processing area for placing materials, and the processing head is configured to move on the processing area to achieve laser processing. The processing device communicates with a processing control device (such as one or more devices marked by 201 in FIG. 2), and the processing control device is configured to execute a data processing method based on the processing device (such as the data processing of the preview method of the present application). The hardware structure of the laser processing device is schematically shown in FIG. 3. The laser processing device includes a housing, a processing device base plate 40, a processing head 50, a laser tube 30, a slide rail 80, a communication component 20, and a controller 60. The processing device base plate 40 includes a processing area 41 for placing materials. The housing includes an upper shell 90 and a bottom shell 70. The processing head 50 is slidably disposed on the slide rail 80. The communication component 20 is configured to receive a target image obtained by the steps of the method provided in the above embodiment. The controller 60 controls the processing head 50 to move on the slide rail 80 to process a surface of the processing material based on the target image. The communication component 20 and the controller 60 are installed inside a backplate of the laser tube 30, which are not visible in FIG. 3, so they are shown in a block diagram connected by dotted lines.

In one embodiment, a reflector 11 is disposed between the processing head 50 and the laser tube 30. The light beam generated by the laser tube 30 is reflected by the reflector 11 to the processing head 50, and then is reflected, focused, etc., and emitted to process a workpiece.

In one embodiment, the processing head 50 can generate a light spot. In another embodiment, the light spot can be generated by other components such as the laser tube 30 of a carbon dioxide laser tube, and enter a beam emitting device through the reflector 11, and finally exit after passing through the processing head 50 to process the workpiece. The processing head can emit laser, but it can do more than just emit laser.

In one embodiment, a housing of a computer numerical control machine, namely the upper shell 90 and the bottom shell 70 as shown in FIG. 3, together enclose an internal space that can accommodate processing materials. The upper shell 90 and the bottom shell 70 can be detachably connected or fixedly connected, or the upper shell 90 and the bottom shell 70 are an integrally molded structure. In one embodiment, the upper shell 90 is further provided with a rotatable cover, and an operator can open or close the cover to open the internal space to put in or take out the processing material. The blocking and/or filtering effects of the upper shell 90 and the bottom shell 70 can prevent the laser emitted by the processing head 50 from overflowing during operation and causing personal injury to the operator.

As shown in the embodiment of FIG. 3, the slide rail 80 is disposed in the internal space, and the processing head 50 is mounted on the slide rail 80. The slide rails 80 may be X-axis and Y-axis guide rails. The X-axis and Y-axis guide rails may be linear guide rails or guide rails in which the optical axis and rollers slide together. They only need to be able to drive the processing head 50 to move along the X- and Y-axes for processing. A Z-axis moving track may also be provided in the processing head 50 for moving along the Z-axis for focusing before and/or during processing.

As shown in the embodiment of FIG. 2, a communication connection is established between each processing control device and the laser processing device, and the processing control device can be used to display a processing reference image and detect a processing preview operation performed by a user on an image element in the processing reference image. After detecting the processing preview operation, a processing preview instruction is initiated to the laser processing device, so that the laser processing device generates alignment visible light and finally performs alignment processing on the processing reference image. That is to say, in one implementation, the processing control device has at least an image display function and an instruction processing function. The instruction processing function may include but is not limited to an instruction sending function and an instruction generating function, etc., so that the processing control device can initiate accurate laser processing instructions to the laser processing device. The laser processing device has at least a visible light generating function and a visible light moving function, so that the laser processing device can realize the alignment processing of related image elements.

In a specific application scenario, the processing control device can be a terminal device, which can run applications (or clients) for realizing laser processing control functions, as well as various other applications (or clients), such as image processing applications, multimedia playback applications, and navigation applications. Specifically, the terminal device may include but is not limited to smart phones, tablet computers, laptops, desktop computers, car terminals, smart TVs, and smart watches (bracelets), etc., and the embodiments of this application do not impose specific restrictions on this.

Based on the above-mentioned laser processing preview scheme, the present application specifically provides a preview method for laser processing, which can still be performed by the above-mentioned laser processing device, but for the sake of ease of explanation, the laser processing device is described below as a single device. Specifically, please refer to FIG. 4, which is a flowchart of the preview method for laser processing. As shown in FIG. 4, the method may include at least steps S301 to S303:

S301: determining, in response to that a processing preview operation for a target image element in a processing reference image is detected in an image editing area, element indication information of the target image element, wherein the processing preview operation includes one or both of a selection operation and an update operation.

In a specific embodiment, the image editing area may exist in an image display page. For example, the image display page is displayed on a display module of a laser processing device. In some cases, the image display page may also be displayed in a display module of a control device that is in communication connection with the laser processing device. The image editing area may be displayed after the laser processing device starts the real-time processing preview function. Exemplarily, when the laser processing device detects a first triggered alignment processing for one or more image elements in the processing reference image, it is considered that the laser processing device has started the real-time processing preview function, and thus when the processing preview operation for the target image element is detected, the step of "determining the element indication information of the target image element" is triggered. The element indication information may be used to uniquely describe the target image element. Exemplarily, the element indication information may include one or more of element identification, element position, and element size.

In addition, optionally, the processing reference image can be obtained by the user directly drawing in the image editing area, or can be imported by the user from other devices to the laser processing device for display. There is at least one image element in the processing reference image, and an image element that requires laser processing in the at least one image element can be used as the image element, and the target image element can specifically include one or more image elements. It should be noted that in order to facilitate a clearer understanding of the relevant implementation principles of the present application, unless otherwise specified, the following description will be made with the target image element being a single image element as an example.

Specifically, an image element in the processing reference image can be specified by users in the laser processing device. For example, the user can add a to-be-processed label for the image element that needs to be laser processed or processed preview in the processing reference image displayed in the image editing area, so that the image element that needs to be laser processed or processing preview is used as an image element by the laser processing device. Optionally, the image element in the processing reference image can also be automatically identified by the laser processing device, such as identifying one or more preset categories of image elements according to user instructions (or default recognition instructions in the laser processing device), and using the identified image element as an image element. Certainly, users can also add ignore tags to image elements that do not require laser processing or processing preview to prevent the image elements from being identified as image elements, and make image elements that do not have ignore tags added be treated as image elements. This application does not limit the method of determining image elements.

In addition, as an exemplary implementation method, the processing preview operation for the target image element in the processing reference image can be manually performed by users in the image editing interface. Specifically, it can be performed by users with the help of peripheral configurations of the laser processing device (such as a mouse), and/or achieved by clicking on the touch screen. Optionally, the processing preview operation of the target image element may also be triggered by users through voice control or gesture control. Specifically, after receiving a voice signal or gesture signal, the laser processing device can identify the voice or gesture signal, thereby determining the target image element indicated by the signal, and generating corresponding program instructions to enable the laser processing device to perform a processing preview operation on the target image element.

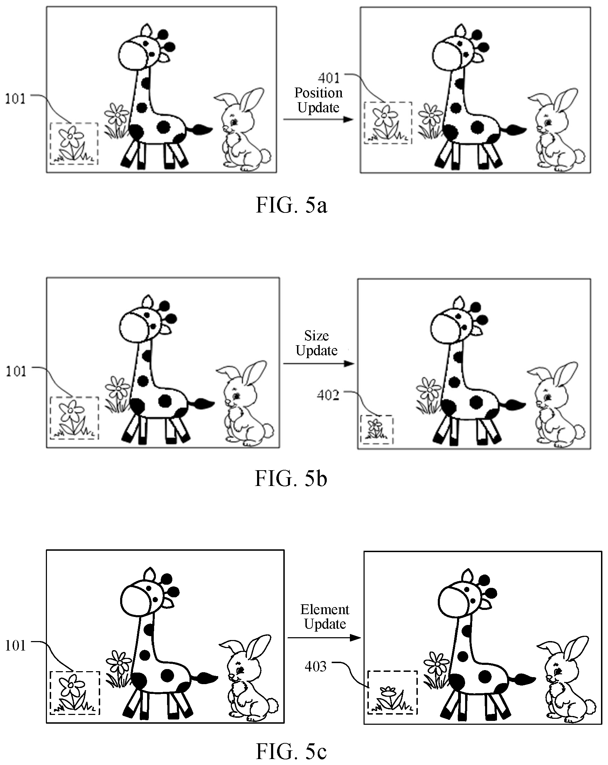

Exemplarily, a click operation in the processing preview operation may include one or more of a single-click operation, a long-press operation, and a double-click operation. The update operation in the processing preview operation may include one or more of a position update operation, a size update operation, and an element update operation. Specifically, the position update operation is used to update the display position of the image element in the processing reference image. For example, the image element marked by 401 in FIG. 5a is obtained after the position of the image element 101 is updated. The size update operation is used to update the size of the image element in the processing reference image. For example, the image element marked by 402 in FIG. 5b is obtained after the size of the image element 101 is updated. The element update operation is used to update the content of an image element. For example, the image element marked by 403 in FIG. 5c is obtained after the content of the image element 101 is updated.

S302: obtaining alignment visible light parameters of the target image element.

In a specific embodiment, the alignment visible light parameters include, but are not limited to, one or more of the following: brightness parameters, beam size parameters, visible light color parameters, power parameters, and visible light emitter type parameters. Specifically, the brightness parameter is used to indicate brightness of the visible light, the beam size parameter is used to indicate thickness of the visible light, and the visible light color parameter is used to indicate a color of the visible light (such as red, green, blue, etc.). The power parameter is used to indicate power used when emitting the alignment visible light (i.e., output power of the alignment visible light). Specifically, when the alignment visible light is a laser, the depth of the marks left on the laser processing material varies depending on the output power of the alignment visible light. The visible light emitter type parameter is used to indicate a type of emitter used to generate the alignment visible light. Specifically, when the alignment visible light is a laser, the emitter may also be referred to as a laser. The types of lasers can be categorized based on output wavelength, including ultraviolet lasers, visible light lasers, and infrared lasers. They can also be classified according to pulse width, such as continuous wave lasers, quasi-continuous lasers, pulsed lasers, and nanosecond lasers. Additionally, classification may be based on other dimensions (such as working medium or power range). The embodiments of this application are not limited by these classifications.

In a specific implementation, the alignment visible light parameters may be input by users or may be fixed parameters pre-set in the laser processing device. In another specific implementation, the alignment visible light parameters can be associated with the processing importance of the image elements. Then, after identifying the element type of the target image element, the laser processing device can use the alignment visible light parameters associated with the element type as the alignment visible light parameters used when performing alignment processing on the target image element. Exemplarily, in an embodiment of the present application, the alignment visible light parameters associated with the processing importance include at least parameters that affect the visual effect of the alignment visible light, such as one or more of visible light color parameters, beam size parameters, and brightness parameters.

Specifically, the processing importance can be understood as the degree of impact on the expected laser processing effect when the image element is not laser processed (or omitted). Since the element types of image elements that need to be processed in different laser processing scenarios are usually quite different, and the importance of different types of image elements in the same laser processing scenario is usually inconsistent, when different types of image elements are omitted from processing in the same laser processing scenario, the degree of impact on the laser processing effect is different. Then, by associating the alignment visible light parameters with the processing importance, the laser processing device can generate alignment visible light with different visual effects based on image elements of different importance, and ultimately make the alignment effects of image elements with higher importance and image elements with lower importance more distinguishable. In this case, users can more easily observe the laser processing positions of more important image elements, thereby ensuring the laser processing effect to a certain extent.

S303: generating alignment visible light according to the alignment visible light parameters, and performing alignment processing on the target image element by using the alignment visible light based on the element indication information of the target image element, so as to indicate a laser processing position of the target image element in a laser processing area.

In a specific embodiment, the laser processing device can locate the target image element according to the element indication information, and then use the alignment visible light to move along a line depicting the target image element, thereby achieving alignment processing of the target image element. Optionally, a movement trajectory of the alignment visible light may also be determined based on an edge contour of the target image element, which is not limited in the embodiment of the present application.

Since the alignment visible light has the characteristics of linear propagation and wireless extension, it is difficult to detect a light spot formed by the alignment visible light in the absence of an obstructing medium, thereby making it impossible to achieve a visualized alignment effect. Then, in order to observe the movement trajectory of the alignment visible light (i.e., the alignment effect), the alignment visible light can be projected onto a visible light projection panel so that the emitted alignment visible light can form a light spot on the projection panel, thereby showing the effect of the alignment processing and making the alignment effect visible. Specifically, the alignment effect can at least be used to indicate the laser processing position of the target image element.

In addition, it is not difficult to understand that when actually performing alignment processing on the target image element, the laser processing device can also control an emission angle (or direction) of the alignment visible light, so that the alignment visible light can be projected onto the designated visible light projection panel. Specifically, the visible light projection panel can refer to the plane formed by a material placement table in the laser processing device (including a horizontal plane or a vertical plane), or it can refer to the plane formed by the laser processing material placed on the material placement table, or it can be a plane formed by other media that can reflect visible light and do not belong to the laser processing device.

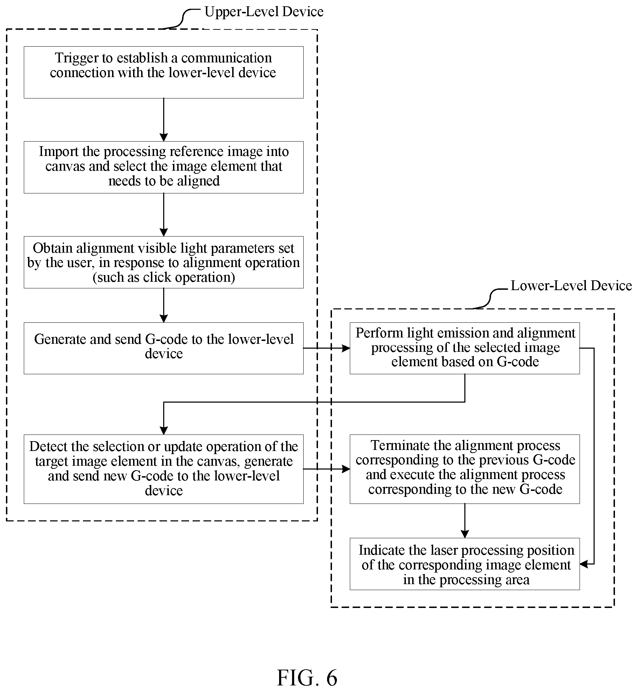

In an actual laser processing scenario, if the above embodiments are performed by a composite type of laser processing device, a feasible laser processing process can be exemplarily shown in FIG. 6. In FIG. 6, the laser processing device specifically includes a laser processing upper-level device (also referred to as the processing control device) and a laser processing lower-level device (also referred to as the laser processing device).

As shown in FIG. 6, when a user needs to perform laser processing (or alignment processing) on image elements in the processing reference image, the user can first trigger the laser processing upper-level device to establish a communication connection with the laser processing lower-level device, and import the processing reference image into canvas (or image editing area) of the laser processing upper-level device. After that, the user can select the image element that needs to be aligned on the canvas and set the alignment parameters (at least including the aforementioned alignment visible light parameters) in the laser processing upper-level device, so that the laser processing upper-level device can generate and send G-code (or processing preview instruction) related to the image element to the laser processing lower-level device after detecting that the user has triggered the alignment operation. It should be noted that the alignment operation mentioned here is usually performed to trigger the first alignment of image elements in the processing reference image. Therefore, in order to avoid waste of laser resources due to incorrect selection or update operations after the user imports the processing reference image, the alignment operation here can be a selection operation of the functional component (such as a click operation).

In addition, G-code is a set of program instructions generated by a numerical control (NC) programming language. After receiving the G-code, the laser processing lower-level device can execute light emission (i.e., generate alignment visible light) based on the G-code, and perform alignment processing on the image element selected by the user, thereby indicating the laser processing position of the image element within the laser processing area. If, during the alignment processing of the image element, the laser processing upper-level device detects the user's selection or update operation on the target image element, it will directly generate G-code related to the target image element and send the new G-code to the laser processing lower-level device, so that the laser processing lower-level device can terminate the currently executing alignment process and execute the new G-code to realize the alignment processing of the target image element, and finally indicate the laser processing position of the target image element in the laser processing area.

In an embodiment of the present application, when the laser processing device detects a processing preview operation for an image element in an image editing area, it will determine the element indication information and alignment visible light parameters of the image element, and then generate corresponding alignment visible light based on the alignment visible light parameters, and use the alignment visible light to perform alignment processing on the image element according to the element indication information, so as to finally use a light spot formed by the alignment visible light in the laser processing area to indicate the laser processing position of the image element. Since the selection and update operations in the image editing area are usually generated when the image elements need to be adjusted, the element adjustment will inevitably lead to changes in the corresponding laser processing position. Then, when a selection operation or an update operation is detected, the alignment processing of the image element is automatically triggered, so that the user can align the image element without performing additional selection or triggering operations after editing the image element, thereby realizing real-time preview of the laser processing position of the image element during the user's image editing process, and effectively improving the user's efficiency in aligning image elements.

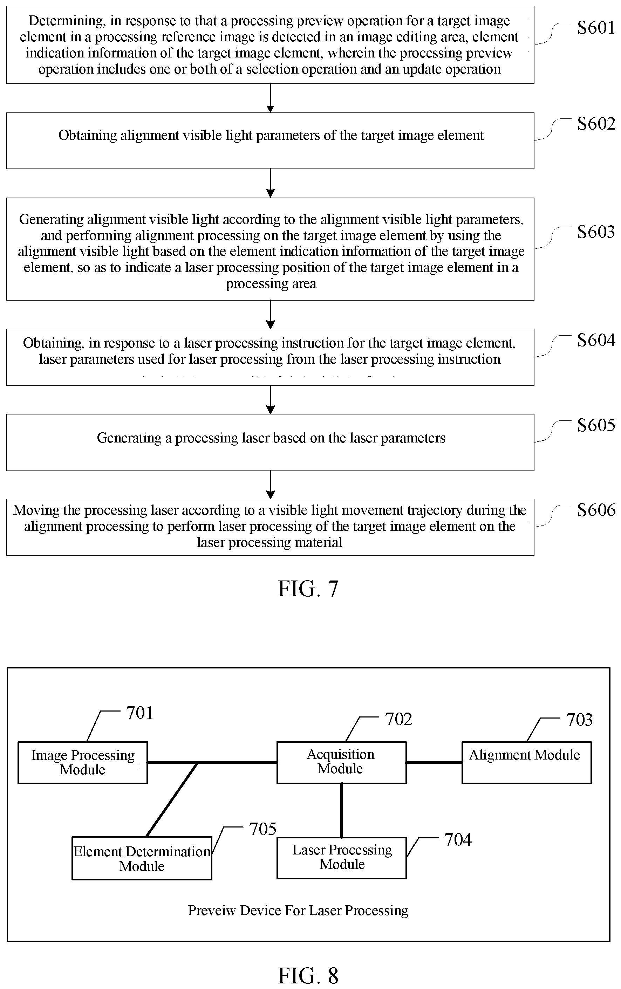

Based on the above-mentioned preview method for laser processing and the laser processing preview method shown in FIG. 5, the present application also provides another preview method for laser processing, which can still be executed by the above-mentioned laser processing device. Specifically, please refer to FIG7, which is a flowchart of the preview method for laser processing. As shown in FIG. 7, the method includes at least steps S601 to S606:

S601: determining, in response to that a processing preview operation for a target image element in a processing reference image is detected in an image editing area, element indication information of the target image element, wherein the processing preview operation includes one or both of a selection operation and an update operation.

In a specific implementation, the laser processing device may be bound to an operation monitoring event in the image editing area, so as to use the operation monitoring event to monitor the processing preview operation triggered in the image editing area. Specifically, when the laser processing device detects that the operation monitoring event is called, it can obtain the operation execution information detected by the operation monitoring event under the corresponding processing operation preview, and then use the image element associated with the operation execution information as the target image element to trigger the execution of the step of "determining the element indication information of the target image element" based on the operation execution information. Specifically, the operation execution information may include at least one of coordinate information for indicating a trigger position of the processing preview operation and size information for indicating a size change of an element.

In an exemplary implementation, when the operation monitoring event is used to monitor a selection operation in an image editing area, the operation execution information detected by the operation monitoring event includes at least coordinate information of the selection operation. Specifically, the coordinate information of the selection operation is used to indicate the trigger position of the selection operation within the image editing area. For example, when the selection operation is a click operation, the trigger position of the selection operation may refer to the position where the user generates a click action in the image editing area. When the operation monitoring event is used to monitor the update operation in the image editing area, the operation execution information detected by the operation monitoring event may include: the element selected by the update operation, the size change record and the coordinate change record during the update process.

In actual application scenarios, in order to prevent invalid light emission of the laser processing device, the operation execution information can be set to at least include coordinate information for indicating the trigger position of the processing preview operation, so that the laser processing device can obtain the coordinate information corresponding to the processing preview operation from the corresponding operation execution information after detecting that the operation monitoring event is called. Then, when the obtained coordinate information corresponds to an image element displayed in the image editing area, the displayed image element is used as the image element associated with the operation execution information to trigger the alignment processing of the image element.

In the embodiment of the present application, illustratively, the operation monitoring event may specifically include one or more of a click event, a mouseDown event, a mouseMove event, and a mouseUp event. The click event is used to detect the user's click operation within the image editing area. The mouseDown event is used to detect the user's operation of pressing a mouse button in the image editing area, the mouseMove event is used to detect the user's operation of moving the mouse while pressing the mouse button in the image editing area, and the mouseUp event is used to detect the user's operation of releasing the mouse button in the image editing area. Optionally, the laser processing device may determine that an element update operation is detected after detecting a continuous call operation of a mouseDown event, a mouseMove event, and a mouseUp event, or after detecting a call operation of a mouseMove event, thereby triggering the acquisition of element indication information of the target image element.

Certainly, in other embodiments, the user may also trigger an update operation on the target image element by inputting new coordinates or element sizes, and the embodiments of the present application do not limit this. At this time, the element indication information may also be input by the user on an operable panel. Then, when a laser engraving device detects a data input operation for any image element in the processing reference image on the operable panel, it can determine that the image element is a target image element, and determine that a processing preview operation for the target image element is detected, and then obtain the element indication information of the target image element from the input data corresponding to the data input operation, and then send the element indication information in the input data to the laser processing device, so that after the laser processing device determines the element indication information of the target image element, it uses alignment visible light to perform alignment processing on the target image element based on the element indication information of the target image element.

It is worth mentioning that the operable panel can be a functional module in the laser processing device. In this case, the sending of element indication information refers to the data sending between different functional modules of the same device. The operable panel can also be a functional module on other devices that allow the laser processing device to be controlled. For example, when the laser processing device is a laser lower-level device, the operable panel can be a functional module in the laser upper-level device. At this time, the sending of element indication information refers to the data sending between different devices.

In one implementation, the processing preview operation may be detected during a process of performing a historical alignment process on the processing reference image. The historical alignment processing refers to an alignment processing triggered and executed by the laser processing device for one or more image elements in the processing reference image before detecting the current processing preview operation, such as the alignment processing triggered and executed last time. In this case, the laser processing device can also determine historical image elements from the processing reference image, and then select a target historical image element whose element identification is different from the element identification of the target image element from the determined historical image elements, and use alignment visible light to perform alignment processing on the target historical image element. Specifically, the historical image element refers to an image element in the aforementioned one or more image elements that has not been subjected to historical alignment processing.

That is to say, during the alignment processing for the processing reference image, the laser processing device can continue to complete the alignment processing of the image elements that were not completed last time (i.e., the target historical image elements) after aligning the target image elements this time. It can be understood that the alignment processing is usually triggered when the user wants to preview the laser processing position of one or more image elements. When the laser processing device detects a selection operation or update operation on the target image element during the execution of the historical alignment processing, it will trigger a new alignment processing, thereby interrupting the historical alignment processing. The user may need to re-execute the alignment processing for the target historical image element later, increasing the user's workload in the alignment processing scenario. Then, the method provided in the embodiment of the present application can enable the user to browse the laser processing position of the target image element in real time, and can automatically trigger the alignment processing of the target historical image element after the user browses the laser processing position of the target image element, which not only reduces the user's workload, but also meets the user's position preview needs at each alignment stage.

It is worth mentioning that for other relevant implementations of step S601, please refer to the specific embodiment of step S301, which will not be repeated here.

S602: obtaining alignment visible light parameters of the target image element.

In one embodiment, the alignment visible light parameters include visible light color parameters. In this case, if the processing preview operation is detected during the historical alignment processing performed on the processing reference image, the laser processing device can first determine visible light colors used in the historical alignment processing when obtaining the laser processing color parameters, and then select any visible light color different from the visible light colors used in the historical alignment processing from preset visible light colors as a target visible light color, and use the color parameters of the target visible light color as the visible light color parameters.

In another embodiment, the laser processing device can also obtain other alignment parameters, such as alignment type (including but not limited to loop execution, execution N times, etc., N is a positive integer) and visible light movement speed parameters (such as movement speed, movement acceleration, etc.), etc., so as to use the generated alignment visible light to perform specific alignment processing according to other alignment parameters, thereby increasing the user's control over the alignment processing, so that the alignment processing of the embodiment of the present application can meet the user's usage needs in many aspects and improve the user's convenience of use.

S603: generating alignment visible light according to the alignment visible light parameters, and performing alignment processing on the target image element by using the alignment visible light based on the element indication information of the target image element, so as to indicate a laser processing position of the target image element in a laser processing area.

In one embodiment, when the processing preview operation is detected to be an update operation, the laser processing device may further perform alignment processing on the target image element (or reference image element) before the update. That is, the target image element is obtained by updating the reference image element. Specifically, the laser processing device can first determine the reference image element and obtain the element indication information of the reference image element, and then use the alignment visible light to perform alignment processing on the reference image element based on the element indication information of the reference element. Then, after detecting the update operation on the target image element, the laser processing device uses the alignment visible light to align the target image element and the reference image element, so that the user can more intuitively feel the changes in the laser processing position before and after the image element is updated. To a certain extent, it can enable the user to more quickly adjust the image element to meet the expected laser processing effect, effectively improving the efficiency of element alignment in the laser processing scenario.

Optionally, the laser processing device may perform alignment processing on the reference image elements after performing alignment processing on the target image elements, and the alignment processing for the target image elements and the reference image elements may be performed alternately and cyclically until the conditions for ending the alignment are met. Specifically, conditions for ending the alignment include: detecting a processing preview operation for a new image element, and/or the number of cycles reaching a preset number, etc. Exemplarily, an execution order of alignment is as follows: target image element reference image element target image element reference image element...→→→→ →finish.

As an exemplary implementation, the alignment visible light may include a first visible light and a second visible light, the first visible light being used to perform alignment processing on the target image element, and the second visible light being used to perform alignment processing on the reference image element. In this case, a visible light processing device can determine two visible light color parameters for indicating different visible light colors as the visible light color parameter of the first visible light and the visible light color parameter of the second visible light after detecting the update operation for the target image element, so that the visible light processing device can generate the first visible light and the second visible light respectively based on the different visible light color parameters, and then use the first visible light to perform alignment processing on the target image element based on the element indication information of the target image element, and use the second visible light to perform alignment processing on the reference image element based on the element indication information of the reference image element.

In this case, the laser processing device uses two different colors of alignment visible light to align the target image element and the reference image element respectively, so that laser processing positions of the target image element and the reference image element indicated by the laser processing device are more different in visual presentation, and users can more easily see the position changes before and after the elements are updated.

S604: obtaining, in response to a laser processing instruction for the target image element, laser parameters used for laser processing from the laser processing instruction.

In a specific embodiment, the laser processing instruction is used to instruct the laser processing device to perform laser processing on the target image element. Specifically, the laser processing instruction may include voice instructions, gesture instructions, or text instructions input by the user into the laser processing device. The laser processing instruction at least includes laser parameters that can be used to indicate the laser processing. The laser parameters may include but are not limited to one or more of laser output power, laser color parameters, and laser wavelength parameters.

S605: generating a processing laser based on the laser parameters.

In a specific embodiment, when the alignment visible light is a low-power laser, the laser processing device can generate the processing laser by adjusting (such as increasing) the output power of the alignment visible light, so that the laser parameters can only be used to indicate the laser output power, thereby reducing the amount of data during data transmission. In other implementations, the laser processing device may also regenerate the processing laser based on relevant parameters. Since processing lasers typically require the capability to melt laser processing materials, while alignment visible light only needs to be able to project a visible light spot within the laser processing area, the generation of processing lasers and alignment visible light imposes different performance requirements on the laser processing devices. In view of this, an embodiment of the present application proposes that the laser processing device may include two processing modules: a processing laser and an alignment visible light device, so that the laser processing device can use the processing laser to generate processing laser and use the alignment visible light device to generate alignment visible light.

In specific implementations, the processing laser and the alignment visible light device can be lasers with different performances, which simplifies the types of work that the same laser needs to perform, and reduces the frequency of changing laser emission parameters and performance parameters of the same laser. This can ensure the performance stability of the laser to a certain extent and facilitate the maintenance of the laser by relevant technicians.

In addition, before generating the processing laser, the laser processing device can also obtain description information of the laser processing material and perform area detection on a laser processing area to obtain a detection result. Specifically, the detection result is used to indicate whether the laser processing area is covered by the laser processing material indicated by the description information. When the detection result indicates that the laser processing area is covered by the laser processing material, the step of generating the processing laser based on the laser parameters is triggered, thereby minimizing the situation of performing laser processing on a wrong laser processing material and effectively preventing material waste.

S606: moving the processing laser according to a visible light movement trajectory during the alignment processing to perform laser processing of the target image element on the laser processing material.

Specifically, the visible light movement trajectory is used to indicate a processing path during laser processing. The laser processing area is usually an area in the laser processing material, meaning that the laser processing area may be located on a surface of the laser processing material.

In an embodiment of the present application, when the laser processing device detects an update operation for a target image element within the image editing area, it triggers the execution of alignment processing for the target image element, and ultimately uses the light spot formed by the alignment visible light in the laser processing area to indicate the laser processing position of the target image element, thereby realizing a real-time preview of the laser processing position of the target image element during the update process of the target image element. In addition, the laser processing device can also obtain element indication information of the reference image element, so as to perform alignment processing on the reference image element after the target image element is aligned. The reference image element refers to the target image element before the update. Then, by aligning both the target image element and the reference image element, the user can more intuitively feel the changes in the laser processing position before and after the element is updated. To a certain extent, the user can more quickly adjust the image element to meet the expected laser processing effect, thereby effectively improving the efficiency of element alignment in the laser processing scenario.

Based on the above-mentioned embodiments of the preview method for laser processing shown in FIG. 4 and FIG. 7, the present application further discloses a preview device for laser processing for executing the preview method for laser processing shown in FIG. 4 and FIG. 7. Specifically, the preview device may be a computer program (including program code) running on the laser processing device mentioned above. Referring to FIG. 8, the preview device for laser processing may include at least an image processing module 701, an acquisition module 702, and an alignment module 703, and may further optionally include one or more of a laser processing module 704 and an element determination module 705.

Specifically: the image processing module 701 is configured to determine element indication information of a target image element in a processing reference image if a processing preview operation is detected for the target image element in the processing reference image, wherein the processing preview operation includes one or both of a selection operation and an update operation;

The acquisition module 702 is configured to obtain alignment visible light parameters of the target image element;

The alignment module 703 is configured to generate alignment visible light according to the alignment visible light parameters, and use the alignment visible light to perform alignment processing on the target image element based on the element indication information of the target image element to indicate a laser processing position of the target image element in the laser processing area.

In one embodiment, the image editing area is bound to an operation monitoring event, and the operation monitoring event is used to monitor the processing preview operation triggered in the image editing area; the image processing module 701 may further be configured to perform:

obtaining, in response to detecting that the operation monitoring event is called, operation execution information detected by the operation monitoring event under a corresponding processing preview operation; and using an image element associated with the operation execution information as the target image element, and triggering the step of determining the element indication information of the target image element based on the operation execution information.

In another embodiment, the operation monitoring event is used to monitor the selection operation within the image editing area, and the operation execution information detected by the operation monitoring event at least includes coordinate information of the selection operation, and the coordinate information of the selection operation is used to indicate a trigger position of the selection operation within the image editing area.

In another embodiment, the operation monitoring event is used to monitor the update operation in the image editing area, and the operation execution information detected by the operation monitoring event includes: an element selected by the update operation, and a size change record and a coordinate change record during an update process.

In another embodiment, the operation execution information at least includes coordinate information for indicating a trigger position of the processing preview operation; after detecting that the operation monitoring event is called, the image processing module 701 may further be configured to perform:
obtaining coordinate information corresponding to the processing preview operation from the operation execution information; and when the obtained coordinate information corresponds to an image element displayed in the image editing area, the displayed image element is used as the image element associated with the operation execution information.

In yet another embodiment, the image processing module 701 may further be configured to perform:
determining, in response to that a data input operation for any image element in the processing reference image is detected on an operable panel, the any image element as the target image element, and it is determined that the processing preview operation for the target image element is detected;
obtaining element indication information of the target image element from the input data corresponding to the data input operation; and
sending the element indication information in the input data to the laser processing device, so that after the laser processing device determines the element indication information of the target image element, the alignment visible light is used based on the element indication information of the target image element to perform alignment processing on the target image element.

In yet another embodiment, the preview device for laser processing may include a laser processing module 704, and the laser processing module 704 may be configured to perform:
obtaining, in response to a laser processing instruction for the target image element, laser parameters used for laser processing from the laser processing instruction; generating a processing laser based on the laser parameters; and moving the processing laser according to a visible light movement trajectory during the alignment processing to perform laser processing on the target image element in the laser processing area.

In yet another embodiment, the laser processing module 704 may also be configured to perform:
obtaining description information of a laser processing material; performing an area detection on the laser processing area to obtain a detection result, and the detection result is used to indicate whether the laser processing area is covered by the laser processing material indicated by the description information; and triggering, in response to the detection result indicating that the laser processing area is covered by the laser processing material, the step of generating the processing laser based on the laser parameters.

In another embodiment, the processing preview operation is detected during a historical alignment process of the processing reference image, and the historical alignment process is triggered and executed for one or more image elements in the processing reference image before the processing preview operation is detected. The preview device for laser processing may include an element determination module 705, and the element determination module 705 may be specifically configured to execute:
determining a historical image element from the processing reference image, and the historical image element refers to an image element in the one or more image elements on which the historical alignment process has not been performed; and selecting a target historical image element whose element identifier is different from an element identifier of the target image element from the determined historical image element, and call the alignment module 703 to use the alignment visible light to perform alignment processing on the target historical image element.

In another embodiment, the processing preview operation is detected during a historical alignment process performed on the processing reference image, and the historical alignment process is triggered and executed for one or more image elements in the processing reference image prior to the detection of the processing preview operation. The alignment visible light parameters include visible light color parameters. When the acquisition module 702 is configured to obtain the visible light color parameters, it is specifically configured to perform:
determining a visible light color used in the historical alignment processing; selecting a target visible light color from preset visible light colors, and the target visible light color is different from the visible light color used in the historical alignment processing; and obtaining color parameters of the target visible light color and using the color parameters obtained as the visible light color parameters.

In yet another embodiment, when the detected processing preview operation is the update operation, the element determination module 705 may be specifically configured to perform:
determining a reference image element and obtaining element indication information of the reference image element, and the target image element is obtained by updating the reference image element; call the alignment module 703 to use the alignment visible light based on the element indication information of the reference image element to perform alignment processing on the reference image element.

In another embodiment, the alignment visible light includes a first visible light and a second visible light, and the first visible light and the second visible light are generated based on different visible light color parameters; when the alignment module 703 uses the alignment visible light to perform alignment processing on the target image element based on the element indication information of the target image element, the following steps may be specifically performed:
performing, using the first visible light based on the element indication information of the target image element, alignment processing on the target image element. When the alignment module 703 uses the alignment visible light to perform alignment processing on the reference image element based on the element indication information of the reference image element, it can specifically perform: using the second visible light to perform alignment processing on the reference image element based on the element indication information of the reference image element.

According to one embodiment of the present application, the respective modules in the preview device for laser processing shown in FIG. 8 are functionally divided based on logical operations. The above modules can be individually or completely integrated into one or more other modules, or one (or some) of the modules can be further divided into multiple smaller functional modules. Such variations may achieve the same operations without affecting the technical effects of the embodiments of the present application. In other embodiments of the present application, the above-mentioned preview device based on laser processing may also include other modules. In actual applications, these functions may also be implemented with the assistance of other modules, and may be implemented by the collaboration of multiple modules.

According to another embodiment of the present application, the preview device for laser processing as shown in FIG. 8 and the preview method for laser processing of the present application may be implemented by executing a computer program (including program code) on a general-purpose computing device, such as a computer including processing and storage components including a central processing unit (CPU), random access memory (RAM), and read-only memory (ROM). The computer program is configured to perform the respective steps of the method illustrated in FIG. 4 or FIG. 7. The computer program can be recorded in, for example, a computer memory, and loaded into the above-mentioned laser processing device via the computer memory to be run therein.

In an embodiment of the present application, when the preview device for laser processing detects a selection operation or update operation on an image element in the image editing area, it will trigger the execution of alignment processing on the image element, and ultimately use the light spot formed by the alignment visible light in the laser processing area to indicate the laser processing position of the image element. Since the selection and update operations in the image editing area are usually generated when the image elements need to be adjusted, element adjustment will inevitably lead to changes in the corresponding laser processing position. Then, when a selection operation or an update operation is detected, the alignment processing of the image element is automatically triggered, so that users can align the image element without performing additional selection or triggering operations after editing the image element, and realizes real-time preview of the laser processing position of the image element during a user's image editing process, thereby effectively improving the efficiency of users in aligning image elements.

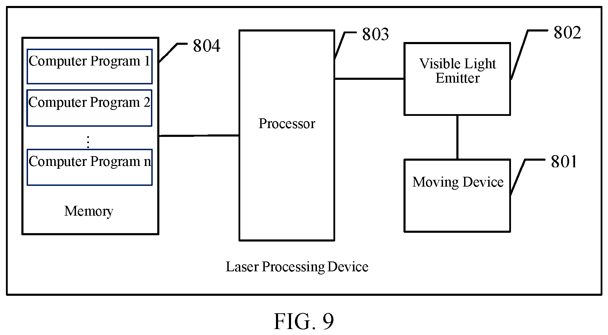

Based on the above-described method embodiments and device embodiments, the present application further provides a laser processing device. Please refer to FIG. 9. The laser processing device at least includes a visible light moving device 801 (which can be a sliding track), a visible light emitter 802, a processor 803 and a memory 804, and the visible light emitter 802 and the memory 804 of the laser processing device can be connected to the processor 803 through a bus or other means. The visible light emitter 802 is configured to generate alignment visible light, and the visible light emitter 802 can be movable (e.g., slidable) on the visible light moving device 801; the memory 804 is a memory device in the laser processing device and is configured to store programs and data. It is understandable that the memory 804 here may include a built-in memory in the laser processing device, and of course may also include an extended memory supported by the laser processing device. The memory 804 provides a storage space, which stores an operating system of the laser processing device. In addition, the storage space further stores one or more computer programs suitable for being loaded and executed by the processor 803. These computer programs may be one or more sets of program code.

It should be noted that the memory here can be a high-speed RAM memory or a non-volatile memory, such as at least one disk memory; optionally, it can also be at least one memory located away from the aforementioned processor. The processor 803 (also called CPU, central processing unit) is the computing core and control core of the laser processing device. It is suitable for implementing one or more computer programs, and is specifically suitable for loading and executing one or more computer programs to implement corresponding method steps or corresponding functions.

In one embodiment, the processor 803 can load one or more computer programs stored in the memory 804 and call the visible light emitter 802 and the visible light moving device 801 in the laser processing device in a timely manner to implement corresponding method steps in the method embodiments shown in FIGs. 4 and 7 above, and achieve the same effect as the above method embodiments, which will not be repeated here. Specifically, one or more computer programs in the memory 804 may be used to implement the various steps in the flowcharts shown in FIG. 4 and FIG. 7.

An embodiment of the present application further provides a storage medium (or computer storage medium), which stores one or more computer programs corresponding to the above-mentioned preview method for laser processing. When one or more processors load and execute the one or more computer programs, the description of the preview method for laser processing in the embodiment can be implemented, which will not be repeated here. In addition, an embodiment of the present application further provides a program product, which includes a computer program, and the computer program is suitable for being loaded by a processor and executing the preview method for laser processing as shown in FIGs. 4 and 7. It is understood that the computer program may be executed on one or more devices capable of communicating with each other. The advantageous effects of employing the aforementioned method in the storage medium and the program product are not reiterated herein.

Those skilled in the art will understand that all or part of the processes in the above-mentioned embodiment method can be implemented by instructing related hardware through a computer program. The computer program can be stored in a computer storage medium. When the computer program is executed, it can include the process of the embodiment of the preview method for laser processing as described above. The computer storage medium may be a magnetic disk, an optical disk, a read-only memory (ROM) or a random access memory (RAM).

The above-described embodiments are merely illustrative and should not be construed as limiting the scope of the present application, and a person skilled in the art can understand that all or part of the processes of the above embodiments and equivalent changes made in accordance with the claims of the present application are still within the scope of the present invention.

## Claims

1. A preview method for laser processing, comprising:
determining, in response to that a processing preview operation for a target image element in a processing reference image is detected in an image editing area, element indication information of the target image element, wherein the processing preview operation comprises one or both of a selection operation and an update operation;
obtaining alignment visible light parameters of the target image element; and
generating alignment visible light according to the alignment visible light parameters, and performing alignment processing on the target image element by using the alignment visible light based on the element indication information of the target image element, so as to indicate a laser processing position of the target image element in a laser processing area.

2. The preview method for laser processing according to claim 1, wherein the image editing area is bound to an operation monitoring event, and the operation monitoring event is used to monitor the processing preview operation triggered in the image editing area, and wherein the preview method further comprises:
obtaining, in response to detecting that the operation monitoring event is called, operation execution information detected by the operation monitoring event under a corresponding processing preview operation; and
using an image element associated with the operation execution information as the target image element, and triggering the step of determining the element indication information of the target image element based on the operation execution information.

3. The preview method for laser processing according to claim 2, wherein the operation monitoring event is used to monitor the selection operation in the image editing area, and the operation execution information detected by the operation monitoring event at least comprises coordinate information of the selection operation, wherein the coordinate information of the selection operation is used to indicate a trigger position of the selection operation within the image editing area.

4. The preview method for laser processing according to claim 2, wherein the operation monitoring event is used to monitor the update operation in the image editing area, and the operation execution information detected by the operation monitoring event comprises an element selected by the update operation, and a size change record and a coordinate change record during an update process.

5. The preview method for laser processing according to claim 2, wherein the operation execution information at least comprises coordinate information for indicating a trigger position of the processing preview operation, and wherein after detecting that the operation monitoring event is called, the preview method further comprises:
obtaining coordinate information corresponding to the processing preview operation from the operation execution information; and
when the obtained coordinate information corresponds to an image element displayed in the image editing area, the displayed image element is used as the image element associated with the operation execution information.

6. The preview method for laser processing according to claim 1, further comprising:
determining, in response to that a data input operation for any image element in the processing reference image is detected on an operable panel, the any image element as the target image element, and determining that the processing preview operation for the target image element is detected;
obtaining element indication information of the target image element from input data corresponding to the data input operation; and
sending the element indication information in the input data to the laser processing device, so that after the laser processing device determines the element indication information of the target image element, the alignment visible light is used based on the element indication information of the target image element to perform alignment processing on the target image element.

7. The preview method for laser processing according to claim 1, further comprising:
obtaining, in response to a laser processing instruction for the target image element, laser parameters used for laser processing from the laser processing instruction;
generating a processing laser based on the laser parameters; and
moving the processing laser according to a visible light movement trajectory during the alignment process to perform laser processing on the target image element in the laser processing area.

8. The preview method for laser processing according to claim 7, further comprising:
obtaining description information of a laser processing material;
performing an area detection on the laser processing area to obtain a detection result, wherein the detection result is used to indicate whether the laser processing area is covered by the laser processing material indicated by the description information; and
triggering, in response to the detection result indicating that the laser processing area is covered by the laser processing material, the step of generating the processing laser based on the laser parameters.

9. The preview method for laser processing according to claim 1, wherein the processing preview operation is detected during a historical alignment process of the processing reference image, and the historical alignment process is triggered and executed for one or more image elements in the processing reference image, and wherein the preview method further comprises:
determining a historical image element from the processing reference image, wherein the historical image element refers to an image element in the one or more image elements on which the historical alignment process has not been performed; and
selecting a target historical image element whose element identifier is different from an element identifier of the target image element from the determined historical image element, and after performing alignment processing on the target image element, using the alignment visible light to perform alignment processing on the target historical image element.

10. The preview method for laser processing according to claim 1, wherein the processing preview operation is detected during a historical alignment process performed on the processing reference image, and the historical alignment process is triggered and executed for one or more image elements in the processing reference image, and wherein the alignment visible light parameters comprise visible light color parameters, and a method for obtaining the visible light color parameters comprises:
determining a visible light color used in the historical alignment processing;
selecting a target visible light color from preset visible light colors, wherein the target visible light color is different from the visible light color used in the historical alignment processing; and
obtaining color parameters of the target visible light color and using the color parameters obtained as the visible light color parameters.

11. The preview method for laser processing according to claim 1, wherein when the processing preview operation is detected to be the update operation, the method further comprises:
determining a reference image element and obtaining element indication information of the reference image element, wherein the target image element is obtained by updating the reference image element; and
performing alignment processing on the reference image element by using the alignment visible light based on the element indication information of the reference image element.

12. The preview method for laser processing according to claim 11, wherein the alignment visible light comprises a first visible light and a second visible light, and the first visible light and the second visible light are generated based on different visible light color parameters, wherein the performing alignment processing on the target image element by using the alignment visible light based on the element indication information of the target image element comprises:
performing alignment processing on the target image element by using the first visible light based on the element indication information of the target image element;
wherein the performing alignment processing on the reference image element by using the alignment visible light based on the element indication information of the reference image element, comprises:
performing alignment processing on the reference image element by using the second visible light based on the element indication information of the reference image element.

13. A laser processing device, comprising:
a visible light moving device;
a visible light emitter, configured to emit one or more types of visible light and to perform moving of corresponding visible light by moving on the visible light moving device;
a processor, being in communication with the visible light emitter and adapted to execute one or more computer programs; and
a memory, wherein one or more computer programs are stored in the memory, and when the one or more computer programs are loaded and executed by the processor, a preview method for laser processing is implemented, wherein the preview method comprises:
determining, in response to that a processing preview operation for a target image element in a processing reference image is detected in an image editing area, element indication information of the target image element, wherein the processing preview operation comprises one or both of a selection operation and an update operation;
obtaining alignment visible light parameters of the target image element; and
generating alignment visible light according to the alignment visible light parameters, and performing alignment processing on the target image element by using the alignment visible light based on the element indication information of the target image element, so as to indicate a laser processing position of the target image element in a laser processing area.

14. The laser processing device according to claim 13, wherein the image editing area is bound to an operation monitoring event, and the operation monitoring event is used to monitor the processing preview operation triggered in the image editing area;
the laser processing device obtains, in response to detecting that the operation monitoring event is called, operation execution information detected by the operation monitoring event under a corresponding processing preview operation; and
the laser processing device uses an image element associated with the operation execution information as the target image element, and triggers the step of determining the element indication information of the target image element based on the operation execution information.

15. The laser processing device according to claim 14, wherein the operation monitoring event is used to monitor the selection operation in the image editing area, and the operation execution information detected by the operation monitoring event at least comprises coordinate information of the selection operation, wherein the coordinate information of the selection operation is used to indicate a trigger position of the selection operation within the image editing area.

16. The laser processing device according to claim 14, wherein the operation monitoring event is used to monitor the update operation in the image editing area, and the operation execution information detected by the operation monitoring event comprises: an element selected by the update operation, and a record of size changes and coordinate changes during an update process.

17. The laser processing device according to claim 14, wherein the operation execution information at least comprises coordinate information for indicating a trigger position of the processing preview operation, and wherein after detecting that the operation monitoring event is called, the laser processing device further performs:
obtaining coordinate information corresponding to the processing preview operation from the operation execution information; and
when the obtained coordinate information corresponds to an image element displayed in the image editing area, the displayed image element is used as the image element associated with the operation execution information.

18. The laser processing device according to claim 13, wherein the processing preview operation is detected during a historical alignment process of the processing reference image, and the historical alignment process is triggered and executed for one or more image elements in the processing reference image and wherein the laser processing device further performs:
determining a historical image element from the processing reference image, wherein the historical image element refers to an image element in the one or more image elements on which the historical alignment process has not been performed; and
selecting a target historical image element whose element identifier is different from an element identifier of the target image element from the determined historical image element, and after performing alignment processing on the target image element, the target historical image element is aligned by using the alignment visible light.

19. A laser processing system, comprising:
a laser processing device comprising a processing device base plate and a processing head, wherein the processing device base plate comprises a processing area for placing a material, and the processing head is configured to move over the processing area; and
a processing control device communicating with the laser processing device, wherein the processing control device is configured to execute the preview method for laser processing according to any one of claims 1 to 12.

20. A storage medium, storing a computer program, wherein the computer program, when loaded and executed by a processor, implements the preview method for laser processing according to any one of claims 1 to 12.
